Europäisches Patentamt

European Patent Office

Office européen des brevets

(11) Veröffentlichungsnummer: **0 071 775**
**B1**

(12) # EUROPÄISCHE PATENTSCHRIFT

(45) Veröffentlichungstag der Patentschrift:
08.05.85

(21) Anmeldenummer: 82106175.1

(22) Anmeldetag: 10.07.82

(51) Int. Cl.⁴: **B 22 D 11/126**, B 22 D 11/128,
B 23 K 7/02

(54) Brennschneidrollgang, insbesondere für Metallstranggiessanlagen, sowie Verfahren zum Betreiben des Brennschneidrollgangs.

(30) Priorität: 12.08.81 DE 3131830
19.05.82 DE 3218925

(43) Veröffentlichungstag der Anmeldung:
16.02.83 Patentblatt 83/7

(45) Bekanntmachung des Hinweises auf die Patenterteilung:
08.05.85 Patentblatt 85/19

(84) Benannte Vertragsstaaten:
AT BE CH FR GB LI LU NL SE

(56) Entgegenhaltungen:
AT - B - 259 983
DE - A - 1 758 029
DE - A - 2 552 969
DE - A - 2 813 461
DE - B - 1 301 443
DE - B - 2 408 855
DE - B - 2 550 161
US - A - 3 511 489

(73) Patentinhaber: MANNESMANN Aktiengesellschaft,
Mannesmannufer 2, D-4000 Düsseldorf 1 (DE)

(72) Erfinder: Ehlert, Klaus-Peter, Dr.-Ing.,
Käthe-Kollwitz-Strasse 33, D-4130 Moers 3 (DE)
Erfinder: Zebrowski, Dietmar, Dipl.-Ing., Cecilienweg 14,
D-4172 Straelen 2 (DE)

**Beschreibung**

Die Erfindung betrifft einen Brennschneidroll- gang, insbesondere für Metallstranggießanla- gen, zum Längs- und/oder Querschneiden von Metallsträngen, bestehend aus in gleichen Abständen in Stranglaufrichtung angeordneten mit einem dem Wärmestrom des Schneidbrennerstrahls widerstehenden Schutz versehenen Drehachsen, die jeweils Scheibenrollen mit seitlichen Abständen tragen, auf denen der Metallstrang aufliegt.

Das auf dem Brennschneidrollgang ausgeübte Brennschneidverfahren setzt eine parallel zur Strangbewegungsrichtung verfahrbare Brennschneidmaschine voraus mit einem quer zur Strangbewegungsrichtung verschieblichen Schneidbrenner zum Querschneiden von Metallsträngen, wie z. B. von sich mit Gießgeschwindigkeit bewegenden Stahlsträngen.

Beim Längsschneiden von Metallsträngen, wie z. B. von Stranggußbrammen, ist ein quer- verschieblicher Schneidbrenner nur zur Einstel- lung der Breite des abzuschneidenden Abschnittes erforderlich.

Sowohl beim Querschneiden als auch beim Längsschneiden bewegt sich der Schneidbrenner relativ zum Metallstrang. Beim Querschneiden ergibt sich auf die Länge des vom Metallstrang zurückgelegten Weges während des Brennschnittes eine schräge Bewegungslinie, bezogen auf die Mittenachse des Brennschneidrollgangs.

Sowohl beim Längsschneiden als auch beim Querschneiden überfährt der Schneidstrahl des Schneidbrenners die Scheibenrollen und/oder die Drehachsenabschnitte zwischen den Scheibenrollen. Es ist nicht auszuschließen, daß die Rollen durch den Wärmestrom, durch Schlackespritzer und dergleichen beschädigt werden.

Es ist schon vorgeschlagen worden, die Rollen beim Näherkommen des Schneidbrennerstrahls abzuschwenken, was jedoch eine mangelnde Unterstützung des Stranges zur Folge hat (US- A1-3 511 489).

Es ist ferner schon vorgeschlagen worden, um die Zeit ohne Unterstützung des Metallstranges beim Abschwenken der Rollen so gering wie möglich zu halten, die Rollen während des Ab- schwenkens nach unten oder Zurückschwen- kens nach oben in ihre Ausgangslage durch den Schneidbrennerstrahl hindurchzuschwenken. Diese Lösung bedingt jedoch grundsätzlich schwenkbare Rollen (DE-B2-2 408 855).

Gemäß einem weiteren bekannten Vorschlag befinden sich alle Rollen an einem vom übrigen Rollgang getrennten Rollentisch, der mittels eines hydraulischen Antriebes in den Richtungen der Stranglängsachse vor- und zurückbewegbar ist. Die eine Bewegung des Rollentisches wird beim Näherkommen des Schneidbrennerstrahls ausgeführt, und aufgrund der anderen Bewegung wird eine Entfernung der jeweiligen Rolle vom Schneidbrennerstrahl bewirkt. Die hierzu erforderliche hydraulische Steuerung ist jedoch aufwendig und teuer (DE-B2-2 550 161).

Demgegenüber liegt der Erfindung die Aufgabe zugrunde, ohne Bewegung der Rollen auszukommen, um hydraulische Steuerungen und hydraulische Antriebe einzusparen mit dem Ziel, den Brennschneidrollgang zu vereinfachen.

Die gestellte Aufgabe wird bei dem eingangs bezeichneten Brennschneidrollgang dadurch gelöst, daß zumindest die Drehachsenabschnitte zwischen jeweils zwei Scheibenrollen mit einer entweder metallisch oder keramisch porösen Schutzschicht überzogen sind und daß die porö- se Schutzschicht Speicherräume für Kühlme- dium bildet. Der Schneidbrennerstrahl trifft erfahrungsgemäß nur kurzzeitig auf die sich unter der Bewegung des Metallstranges drehende (ggf. angetriebene) Drehachse und ist auch nur dem Randbereich des Schneidbrennerstrahls ausgesetzt. Die Schutzschicht stellt daher eine wirkungsvolle, ausreichende Vorsorgemaßnahme dar, um eine Beschädigung der Rollen zu vermeiden. Weitere Maßnahmen, wie z. B. Abschwenken der Rollen, Hin- und Herbewegungen des Rollentisches und dgl. sind nicht erfor- derlich, wodurch der Brennschneidrollgang er- geblich weniger Teile aufweist und daher wesentlich vereinfacht wird und weniger an Kostenaufwand erfordert.

In Ausgestaltung der Erfindung ist vorgesehen, daß auch die Seitenflächen der Scheibenrollen mit der Schutzschicht überzogen sind, wodurch ein weitergehender Schutz gegen Beschä- digungen erzielt wird.

Eine weitere Schutzmaßnahme gegen Beschädigungen der Rollen besteht darin, daß die poröse Schutzschicht mit dem Kühlmedium von innen oder außen beaufschlagbar ist.

Für die Beaufschlagung der Schutzschicht mit Kühlmittel ist außerdem vorteilhaft, daß den Scheibenrollen bzw. den Drehachsen gegenüberliegend jeweils Düsen für das Kühlmedium zugeordnet sind.

Die gestellte Aufgabe wird erfindungsgemäß außerdem dadurch gelöst, daß zumindest die Drehachsenabschnitte zwischen jeweils zwei Scheibenrollen mit einer aufgeschweißten, von außen gekühlten Schutzschicht überzogen sind, die aus 70% Nickel, 20% Chrom und einem Rest von 10% Molybdän, Niob und Eisen besteht.

Eine besonders günstige Legierungszusammensetzung ist dadurch gegeben, daß die Schutzschicht aus 70% Nickel, 20% Chrom und einem Rest von 10% Molybdän, Niob und Eisen besteht.

Ein Ausführungsbeispiel der Erfindung ist in der Zeichnung dargestellt und wird im folgenden näher beschrieben. Es zeigen

Fig. 1 eine Draufsicht auf den erfindungsgemäßen Brennschneidrollgang,

Fig. 2 einen teilweisen Querschnitt durch die erfindungsgemäßen Scheibenrollen mit Dreh- achse, gemäß Schnittangabe II-II in Fig. 1.

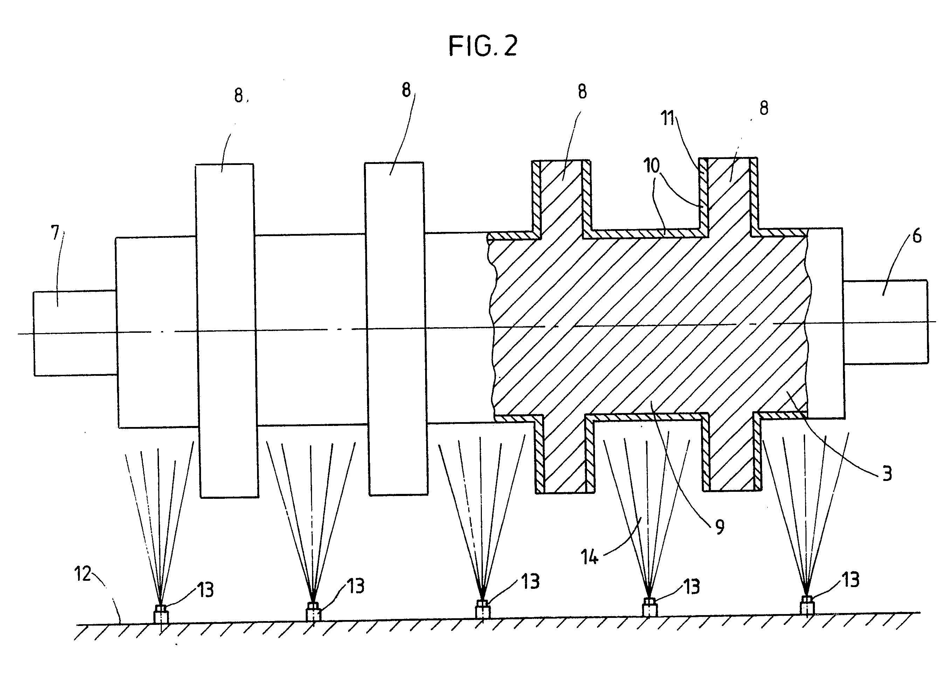

Auf den Fundamentständern 1 und 2 lagern die Drehachsen 3 jeweils in Drehlagern 4 und 5 mit ihren Drehzapfen 6 und 7 (Fig. 2). Die gezeigten acht Drehachsen sind daher ortsfest und lediglich in ihren Drehlagern 4 und 5 drehbar und ggf. mittels eines weiter nicht dargestellten Drehantriebs rotierbar.

Jede Drehachse 3 ist mit Scheibenrollen 8 versehen, die mit gleichgroßen seitlichen Abständen auf der Drehachse 3 angeordnet und befestigt sind. Daraus ergeben sich die Drehachsenabschnitte 9 zwischen je zwei benachbarten Scheibenrollen 8, auf denen Schutzschichten 10 aus metallisch porösen oder aus keramisch porösen Materialien haltbar aufgebracht sind. Außer den Drehachsenabschnitten 8 sind auch die Seitenflächen 11 der Scheibenrollen 8 mit der Schutzschicht 10 überzogen.

Auf dem Hüttenflur oder auf einer mit Abstand angeordneten Sammelschiene 12 sind Düsen 13 an eine Quelle für ein Kühlmedium 14, wie z. B. Wasser, angeschlossen, das in Strahlen gegen die Schutzschicht 10 gesprüht wird. Während des Besprühens nehmen mikrofeine Speicherräume innerhalb der metallischen und/oder keramischen Schutzschicht, z. B. Wasser, in feinverteilter Form auf, das durch Verdunsten an der dem Schneidbrennerstrahl zugekehrten Fläche der Rolle eine Kühlung bewirkt und eine höhere Aufheizung der Schutzschicht 10 verhindert.

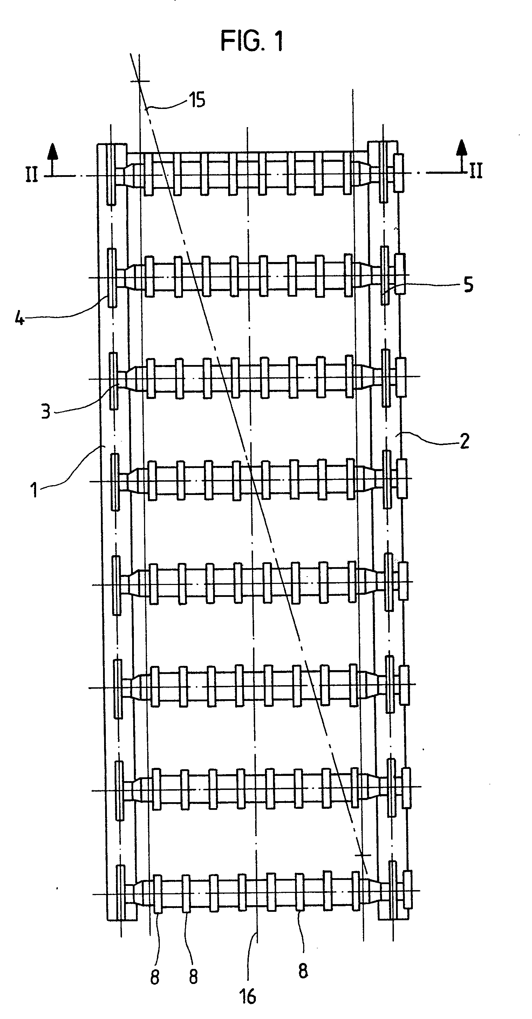

Der (nicht gezeichnete) Schneidbrennerstrahl überquert den durch zwei parallele Linien angedeuteten Metallstrang auf der Brennschneidlinie 15 (Fig. 1). Hierbei fährt der Schneidbrennerstrahl im wesentlichen über die Mitte der Drehachsenabschnitte 9, so daß ein besonders kleiner Durchmesser des Drehachsenabschnittes 9 im Verhältnis zum Durchmesser der Scheibenrollen 8 besonders wirkungsvoll ist. Das Durchmesserverhältnis Drehachsenabschnitt (9)/Scheibenrollen (8) wird vorteilhafterweise wie 1 : 1,7 oder noch kleiner angesetzt.

Die seitlichen Abstände der Scheibenrollen 8 bilden ein weiteres vorteilhaftes Kriterium, um die Brennschneidzeit für einen Querschneide-Vorgang zu beeinflussen, d. h. um den Verlauf der Brennschneidlinie 15 mehr oder weniger schräg zur Metallstrangmittenachse 16 zu gestalten.

**Patentansprüche**

1. Brennschneidrollgang, insbesondere für Metallstranggießanlagen, zum Längs- und/oder Querschneiden von Metallsträngen, bestehend aus in gleichen Abständen in Stranglaufrichtung angeordneten, mit einem dem Wärmestrom des Schneidbrennerstrahls widerstehenden Schutz versehenen Drehachsen, die jeweils Scheibenrollen mit seitlichen Abständen tragen, auf denen der Metallstrang aufliegt, dadurch gekennzeichnet, daß zumindest die Drehachsenabschnitte (9) zwischen jeweils zwei Scheibenrollen (8) mit einer entweder metallisch oder keramisch porösen Schutzschicht (10) überzogen sind und daß die poröse Schutzschicht (10) Speicherräume für Kühlmedium (14) bildet.

2. Brennschneidrollgang nach Anspruch 1, dadurch gekennzeichnet, daß auch die Seitenflächen (11) der Scheibenrollen (8) mit der Schutzschicht (10) überzogen sind.

3. Brennschneidrollgang nach den Ansprüchen 1 und 2, dadurch gekennzeichnet, daß die poröse Schutzschicht (10) mit dem Kühlmedium (14) von innen oder außen beaufschlagbar ist.

4. Brennschneidrollgang nach den Ansprüchen 1 bis 3, dadurch gekennzeichnet, daß den Scheibenrollen (8) bzw. den Drehachsen (3) gegenüberliegend jeweils Düsen (13) für das Kühlmedium (14) angeordnet sind.

5. Brennschneidrollgang, insbesondere für Metallstranggießanlagen, zum Längs- und/oder Querschneiden von Metallsträngen, bestehend aus in gleichen Abständen in Stranglaufrichtung angeordneten, mit einem dem Wärmestrom des Schneidbrennerstrahls widerstehenden Schutz versehenen Drehachsen, die jeweils Scheibenrollen mit seitlichen Abständen tragen, auf denen der Metallstrang aufliegt, dadurch gekennzeichnet, daß zumindest die Drehachsenabschnitte (9) zwischen jeweils zwei Scheibenrollen (8) mit einer aufgeschweißten, von außen gekühlten Schutzschicht (10) überzogen sind, die aus 70% Nickel, 20% Chrom und einem Rest von 10% Molybdän, Niob und Eisen besteht.

**Claims**

1. Flame-cutting roller table, especially for continuous metal casting plant, for the longitudinal and/or transverse cutting of metal strands, comprising rotating shafts which are equally spaced in the direction of strand travel and are protected from the heat flow of the flame-cutting jet, the rotating shafts each being provided with laterally spaced disk rollers to support the metal strand, characterised by at least the rotating shaft sections (9) between two disk rollers (8) having a porous metallic or ceramic protective coating (10) and the porous protective coating (10) forming storage rooms for the cooling medium (14).

2. Flame-cutting roller table according to claim 1, characterised by even the side faces (11) of the disk rollers (8) having a protective coating (10).

3. Flame-cutting roller table according to claims 1 and 2, characterised by the porous protective coating (10) being supplied with the cooling medium (14) from the inside or outside.

4. Flame-cutting roller table according to claims 1 to 3, characterised by nozzles (13) for the cooling medium (14) being arranged opposite the disk rollers (8)/rotating shafts (3).

5. Flame-cutting roller table, especially for continuous metal casting plant, for the longitudinal and/or transverse cutting of metal strands, comprising rotating shafts which are equally spaced in the direction of strand travel and protected from the heat flow of the flame-cutting jet, the rotating shafts carrying laterally spaced disk rollers to support the metal strand, characterised by at least the rotating shaft sections (9) between always two disk rollers (8) having a welded-on, externally cooled protective coating (10) composed of 70% nickel, 20% chrome and the balance of 10% molybdenum, niobium and iron.

## Revendications

1. Table à rouleaux de poste d'oxycoupage, en particulier pour installations de coulée continue de métal, pour le tronçonnage longitudinal et/ou transversal de barres de métal, comprenant des axes de rotation disposés à écartement égal dans le sens de déplacement de la barre, pourvus d'une protection résistant au flux de chaleur dégagé par le jet du chalumeau-coupeur et portant chacun des galets latéralement écartés sur lesquels repose la barre de métal, caractérisée en ce que au moins les écartements (9) sur l'axe de rotation entre deux galets (8) sont toujours revêtus d'une chouche protectrice poreuse (10) métallique ou céramique et que la couche protectrice poreuse (10) constitue des compartiments de retenue pour le fluide de refroidissement (14).

2. Table à rouleaux de poste d'oxycoupage suivant revendication 1, caractérisée en ce que les faces latérales (11) des galets (8) sont également revêtues de la couche protectrice (10).

3. Table à rouleaux de poste d'oxycoupage suivant les revendications 1 et 2, caractérisée en ce que le fluide de refroidissement (14) peut être appliqué sur la couche protectrice poreuse (10) de l'intérieur ou de l'extérieur.

4. Table à rouleaux de poste d'oxycoupage suivant les revendications 1 à 3, caractérisée en ce que des gicleurs (13) pour le fluide de refroidissement (14) sont toujours disposés en face des galets (8) ou des axes de rotation (3).

5. Table à rouleaux de poste d'oxycoupage, en particulier pour installations de coulée continue de métal, pour le tronçonnage longitudinal et/ou transversal de barres de métal, comprenant des axes de rotation disposés à écartement égal dans le sens de déplacement de la barre, pourvus d'une protection résistant au flux de chaleur dégagé par le jet du chalumeau-coupeur et portant chacun des galets latéralement écartés sur lesquels repose la barre du métal, caractérisé en ce que au moins les écartements (9) sur l'axe de rotation entre deux galets (8) sont toujours revêtus d'une couche protectrice (10) soudée et refroidie de l'extérieur se composant de 70% de nickel, de 20% de chrome et d'un reste de 10% de molybdène, de nobium et de fer.

# FIG. 1

FIG.2